# EUROPÄISCHE PATENTSCHRIFT

(11) **EP 2 944 522 B1**
(45) Veröffentlichungstag und Bekanntmachung des Hinweises auf die Patenterteilung: **11.07.2018**
(21) Anmeldenummer: 15161376.7
(22) Anmeldetag: 27.03.2015
(51) Int. Cl.: B60T 3/00, B60P 3/077

(54) **UNTERLEGKEIL FÜR NUTZFAHRZEUGE, STANDSICHERUNGSSYSTEM SOWIE BETRIEBSVERFAHREN**
WHEEL CHOCK FOR COMMERCIAL VEHICLES, SECURING SYSTEM AND METHOD OF OPERATION
CALE POUR VÉHICULES UTILITAIRES, SYSTÈME DE CONTRÔLE DE STABILITÉ ET PROCÉDÉ DE FONCTIONNEMENT

(30) Priorität: 16.05.2014 DE 102014106931
(43) Veröffentlichungstag der Anmeldung: 18.11.2015
(73) Patentinhaber: Alfred Arnold eingetragener Kaufmann Verladesysteme, 70439 Stuttgart (DE)
(72) Erfinder: Arnold, Alfred, 70439 Stuttgart (DE)
(74) Vertreter: Patentanwälte Behrmann Wagner PartG mbB

(56) Entgegenhaltungen:
- DE-A1- 4 330 360
- DE-A1- 19 618 047
- FR-A1- 2 481 663
- FR-A1- 2 672 578
- FR-A1- 2 914 914
- JP-A- H07 277 159
- US-A- 4 122 629
- US-A1- 2004 216 965
- US-A1- 2005 226 705
- US-A1- 2011 290 596
- US-B1- 6 336 527

## Beschreibung

Die Erfindung betrifft einen Unterlegkeil gemäß dem Oberbegriff des Anspruchs 1 zum Unterlegen unter ein Nutzfahrzeugrad als Standsicherung, insbesondere gegen Wegrutschen, Wegrollen oder Wegfahren, mit einem Grundkörper sowie mit zum Übermitteln (Senden) eines Positionierungssignals an von dem Unterlegkeil beabstandete und von diesem separate Empfangsmittel ausgebildeten Signalisierungsmitteln, die zur drahtlosen, insbesondere funkbasierten, Übermittlung des Positionierungssignals ausgebildet sind, wobei der Unterlegkeil relativ zu dem Grundkörper durch Unterlegen unter das Nutzfahrzeugrad verstellbare Antriebsmittel aufweist. Ferner betrifft die Erfindung ein Standsicherungssystem gemäß Anspruch 13 mit mindestens einem derartigen Unterlegkeil, eine Verwendung des Unterlegkeils als Standsicherung von Nutzfahrzeugen gemäß Anspruch 16 sowie ein Verfahren zum Betreiben (Benutzen bzw. Anwenden) eines Unterlegkeils gemäß Anspruch 17.

Unterlegkeile aus Stahlblech oder Gummi zur Sicherung von Nutzfahrzeugen, insbesondere während des Be- und/oder Entladens an einer Verladerampe sind hinlänglich bekannt. Zu den das Be- und Entladen betreffenden Sicherungsvorschriften gehört es, das Nutzfahrzeug vor einer Verladetätigkeit durch Unterlegen eines Unterlegkeils unter ein Nutzfahrzeugrad gegen Wegfahren des Nutzfahrzeugs zu sichern. Eine derartige Technologie ist seit Jahrzehnten bekannt und hat sich bewährt.

Problematisch in der Praxis ist jedoch, dass vorstehende Sicherheitsvorschriften nicht in allen Fällen eingehalten werden, wodurch es immer wieder zu Unfällen an Verladerampen, teilweise mit Personenschäden beim Verladepersonal kommt. Zur Lösung dieses Problems hat die Anmelderin einen verbesserten Unterlegkeil entwickelt, der über ein Stromversorgungskabel mit einer Verladerampensteuerung verbunden ist. Der Keil zeichnet sich durch eine Schalterwippe aus, die durch Unterlegen des Unterlegkeils unter einen Nutzfahrzeugreifen betätigbar ist, wobei das hierdurch erzeugte Schaltersignal als Positionierungssignal zur Signalisierung eines gesicherten Zustandes bzw. zur Signalisierung des Erreichens einer Unterlegposition des Unterlegkeils unter den Nutzfahrzeugreifen über die vorerwähnte Kabelverbindung an die Laderampensteuerung übermittelt wird, welche in Abhängigkeit des Empfangs des Positionierungssignals einen Steuerstrom für die Verladerampe freigibt oder den gesicherten Zustand an einer Informationsampel anzeigt, so dass das Verladepersonal gefahrlos tätig werden kann.

Vorstehender, deutlich verbesserter Unterlegkeil hat sich bewährt. Insbesondere ist der Unterlegkeil robust und witterungsunabhängig einsetzbar. Als Nachteil wird jedoch das notwendige Verbindungskabel empfunden, da dieses insbesondere nach erfolgter Verladung aus dem Gefahrenbereich entfernt werden muss. Darüber hinaus stellt das Kabel eine Stolpergefahr dar. Auch erfordert das Umrüsten einer Standard-Verladerampe auf die Schalter-Unterlegkeile das Vorsehen eines entsprechenden Kabelanschlusses auf der Außenseite des Gebäudes sowie eine Kabelführung zur Verladerampensteuerung.

Zwischenzeitlich werden auf dem Markt auch Unterlegkeile für Nutzfahrzeuge angeboten, die mit einem Reflektor zur Realisierung eines Lichtschrankensystems ausgestattet sind. Mit Hilfe einer externen Lichtquelle sowie eines externen Sensors kann der Unterlegkeil erkannt werden. Es wird jedoch keine Information darüber erhalten, ob sich der Unterlegkeil in einer unter das Nutzfahrzeugrad untergelegten Sicherungsposition befindet oder nicht. Darüber hinaus können die Reflektoren leicht verschmutzen und aufgrund der vom Unterlegkeil abstehenden Anordnung beschädigt werden.

In der US 4,122,629 A1 ist ein gattungsgemäßer Unterlegkeil beschrieben, der einen Sensor aufweist, der mithilfe von Antriebsmitteln betätigbar ist, um die Öffnungsbewegung eines Tores zu steuern.

Ausgehend von dem vorgenannten Stand der Technik liegt der Erfindung die Aufgabe zugrunde, einen eine erhöhte Arbeitssicherheit gewährleistenden Unterlegkeil anzugeben, mit dem verlässlich ein Positionierungssignal an entsprechende Empfangsmittel, insbesondere eine Verladerampensteuerung übermittelt werden kann. Der Unterlegkeil soll dabei besonders robust ausgeführt sein und auch funktionssicher bei extrem tiefen und hohen Temperaturen einsetzbar sein. Ferner besteht die Aufgabe darin, ein Standsicherungssystem für Nutzfahrzeuge mit einem entsprechend verbesserten Unterlegkeil anzugeben sowie ein Verfahren zum Betreiben bzw. zum Benutzen eines Unterlegkeils, durch welches vorstehende Aufgabe(n) gelöst wird/werden.

Diese Aufgabe wird hinsichtlich des Unterlegkeils mit den Merkmalen des Anspruchs 1 gelöst, d.h. bei einem gattungsgemäßen Unterlegkeil dadurch, dass mit den relativ zu dem Grundkörper durch Unterlegen unter das Nutzfahrzeugrad (durch Wechselwirkung des Unterlegkeils mit dem Nutzfahrzeugrad und/oder der Fahrbahn bzw. dem Untergrund) verstellbaren Antriebsmitteln den Signalisierungsmitteln zugeordnete (integrale, d.h. einen Bestandteil des Unterlegkeils bildende) Energieumwandlungsmittel antreibbar sind, die zum Umwandeln einer Bewegungsenergie der Antriebsmittel in elektrische Energie zur Energieversorgung der Signalisierungsmittel ausgebildet sind. Hinsichtlich des Standsicherungssystems wird die Aufgabe mit den Merkmalen des Anspruchs 13 und hinsichtlich des Betriebsverfahrens mit den Merkmalen des Anspruchs 17 gelöst.

Vorteilhafte Weiterbildungen der Erfindung sind in den Unteransprüchen angegeben.

Der Erfindung liegt der Gedanke zugrunde, zur Vermeidung von Nachteilen einer Kabelverbindung zwischen dem Unterlegkeil und einer nicht zu dem Unterlegkeil gehörenden Empfangseinheit, d.h. von Empfangsmitteln, die am und/oder im Unterlegkeil, vorzugsweise am und/oder im Grundkörper des Unterlegkeils, vorgesehenen Signalisierungsmittel so auszubilden, dass mit diesen eine drahtlose, beispielsweise funkbasierte, Übermittlung eines Positionierungssignals möglich ist, welches einen Rückschluss darauf zulässt, ob der Unterlegkeil vorschriftsmäßig unter einem Nutzfahrzeugrad positioniert ist, insbesondere um in Abhängigkeit dieses Signals im Rahmen eines einen nach dem Konzept der Erfindung ausgebildeten Unterlegkeil umfassenden Standsicherungssystems eine Verladerampe und/oder ein Verladetor freizuschalten und/oder eine Informationsampel oder dergleichen Hinweismittel anzusteuern. Die Erfindung beschränkt sich jedoch ausdrücklich nicht nur auf die Ausgestaltung der Signalisierungsmittel zur drahtlosen Positioniersignalübermittlung, sondern sie sieht gleichzeitig zur Gewährleistung eines besonders robusten und auch bei Extremtemperaturen zuverlässig einsetzbaren Unterlegkeils vor, den Unterlegkeil energieautark auszubilden, insoweit, als dass die Signalisierungsmittel, die zur Übermittlung des Positionierungssignals notwendige Energie von integralen Energieumwandlungsmitteln des Unterlegkeils, d.h. nicht von extern beziehen, die insoweit die Signalisierungsmittel mit elektrischer Energie versorgen, wobei die elektrische Energie gewonnen wird durch Umwandlung einer Bewegungsenergie von ebenfalls einem Bestandteil eines nach dem Konzept der Erfindung ausgebildeten Unterlegkeils bildenden Antriebsmitteln, welche durch Unterlegen unter das Nutzfahrzeugrad, vorzugsweise durch unmittelbare Wechselwirkung (insbesondere eine drückende Betätigung) bei der Unterlegbewegung mit dem Nutzfahrzeugrad und/oder dem Untergrund antreibbar, d.h. relativ zu dem Grundkörper verstellbar sind und die selbst wiederum die Energieumwandlungsmittel antreiben, indem letztere die durch den Unterlegvorgang eingetragene Bewegungsenergie der durch die Unterlegbewegung in Bewegung versetzen Antriebsmittel umwandeln in elektrische Energie. Diese elektrische Energie kann, wie später noch erläutert werden wird, unmittelbar zu den Signalisierungsmitteln geleitet werden und/oder in elektrisch leitend mit den Signalisierungsmitteln verbundene Energiepuffermittel, d.h. einen Speicher zum Zwischenspeichern von mittels der integralen Energieumwandlungsmittel erzeugter elektrischer Energie. Anders ausgedrückt umfasst ein nach dem Konzept der Erfindung ausgebildeter Unterlegkeil relativ zu einem Grundkörper verstellbar angeordnete Antriebsmittel (Verstellmittel), die insbesondere durch Druckbeaufschlagung, insbesondere durch Drücken gegen einen Untergrund oder ein Nutzfahrzeugrad beim Unterlegvorgang des Unterlegkeils unter ein Nutzfahrzeugrad verstellbar sind, wobei die hierdurch in die Antriebsmittel eingebrachte Bewegungsenergie von Energieumwandlungsmitteln in elektrische Energie umgewandelt wird, die zur elektrischen Energieversorgung der Signalisierungsmittel dient bzw. nutzbar ist - die insbesondere manuell durch den Unterlegvorgang angetriebenen bzw. betätigten Antriebsmittel treiben also insoweit die Energieumwandlungsmittel des Unterlegkeils an.

Aufgrund der erfindungsgemäßen Möglichkeit der Erzeugung elektrischer Energie unmittelbar im Unterlegkeil durch die Umwandlung von mechanischer Energie von durch die Unterlegaktion bzw. Bewegung angetriebenen Antriebsmitteln wird ein energetisch autarker Unterlegkeil geschaffen, bei welchem auf eine im Stand der Technik notwendige Energieversorgungskabelverbindung verzichtet werden kann (und in Weiterbildung auch verzichtet wird). Darüber hinaus kann auf von extern aufladbare oder austauschbare Akkumulatoren zur Energieversorgung verzichtet werden, welche insbesondere vergleichsweise anfällig wären gegenüber extrem hohen und extrem niedrigen Temperaturen. Der nach dem Konzept der Erfindung ausgebildete Unterlegkeil kann somit witterungsunabhängig verlässlich eingesetzt werden und es ist auf einfache Weise möglich, bestehende Verladeeinrichtungen mit nach dem Konzept der Erfindung ausgebildeten Unterlegkeile zu betreiben bzw. diesbezüglich umzurüsten, da ansonsten auf notwendige Strom- und Signalleitungskabelanschlüsse an der Außenseite des Gebäudes verzichtet werden kann. Darüber hinaus bietet der erfindungsgemäße Unterlegkeil auf überraschend einfache Weise die Möglichkeit zum Einsatz des Unterlegkeils in explosionsgefährdeten Bereichen, da, wie erwähnt, auf entsprechende Energieversorgungskabel verzichtet werden kann und darüber hinaus die Energieumwandlungsmittel verlässlich, insbesondere innerhalb des Grundkörpers kapselbar sind, so dass die Gefahr eines Funkenschlags minimiert ist.

Die Signalisierungsmittel können bei einer entsprechenden Ausgestaltung auch als Diebstahlschutzeinrichtung genutzt werden, indem die Signalisierungsmittel ein entsprechendes Informationssignal drahtlos an die Empfangsmittel übermitteln, wenn diese aus einem definierten, beispielsweise über fakultative Positionsdetektionsmittel, vorzugsweise GPS-Mittel detektierbaren Bereich entfernt werden oder beispielsweise eine definierte zeitlang entsprechende Empfangsmittel des Unterlegkeils kein Freigabesignal von einer entsprechenden Sendequelle erhalten.

Wie erläutert, besteht eine bevorzugte Ausführungsform darin das Positionierungssignal per Funk, d.h. hochfrequent zu übermitteln. Zusätzlich oder alternativ können die Signalisierungsmittel das Positionierungssignal auch optisch übermittelnd ausgebildet sein, wobei dann dem Unterlegkeil bevorzugt fotosensorische Empfangsmittel zugeordnet sind. Ebenso denkbar ist auch eine akustische Übermittlung, insbesondere mittels Ultraschall.

Insbesondere bei der Ausgestaltung der Signalisierungsmittel als optisches Signalisierungsmittel ist es möglich, dass eine vorzugsweise am Grundkörper angebrachte Lichtquelle, insbesondere eine LED nicht nur zum Aussenden eines Positionierungssignals genutzt wird, sondern auch als Statusanzeige, beispielsweise bei der Realisierung einer bidirektionalen Signalverbindung zur Signalisierung des Empfangs eines Quittierungssignals, welches den Empfang des Positionierungssignals durch die separaten Empfangsmittel signalisiert. Eine solche Statusanzeige kann auch separat, d.h. unabhängig von Signalisierungsmitteln, beispielsweise in Form einer LED oder einer akustischen Statusanzeige realisiert werden Hierdurch kann zum Beispiel bei der Realisierung einer bidirektionalen drahtlosen Signalübermittlungsverbindung der Empfang eines Quittierungssignals signalisiert werden.

Besonders bevorzugt ist eine Ausführungsform des Unterlegkeils, bei welcher der Unterlegkeil frei ist von einem externen Stromversorgungskabel zur Versorgung der Signalisierungsmittel mit elektrischer Energie und/oder kein externes Positioniersignalleitungskabel umfasst. Ebenso ist es bevorzugt, wenn der Unterlegkeil keine Kontaktstelle, insbesondere keine Kontaktbuchse zum lösbaren Festlegen/Anschließen des vorgenannten Stromversorgungskabels oder Positioniersignalleitungskabels aufweist.

Besonders bevorzugt ist eine Ausführungsform des Unterlegkeils, bei der den Energieumwandlungsmitteln Energiepuffermittel, insbesondere umfassend mindestens einen elektrischen Kondensator zugeordnet, d.h. elektrisch leitend mit diesen verbunden sind, um die von den Energieumwandlungsmitteln generierte elektrische Energie zwischenzupuffern, insbesondere um die elektrische Energie über ein länger als die Verstellbewegung der Antriebsmittel andauernde Zeitspanne zwischenzupuffern und/oder an die Signalisierungsmittel abgeben zu können. Dabei ist eine Ausführungsform besonders bevorzugt, bei der die Energiepuffermittel ausdrücklich nicht dazu eingerichtet und bestimmt sind, von extern geladen oder zur Versorgung der Signalisierungsmittel mit "neuer" elektrischer Energie mit extern geladenen Akkumulatoren getauscht zu werden.

Im Hinblick auf die Auslösung bzw. den Übermittlungszeitpunkt des Positionierungssignals mittels der Signalisierungsmittel gibt es unterschiedliche Möglichkeiten. So ist eine Ausführungsform realisierbar, bei der die Signalisierungsmittel ein Positionierungssignal aussenden sobald die hierfür zur Verfügung gestellte elektrische Energie ausreicht, d.h. unmittelbar als Folge einer ausreichenden Verstell- bzw. Antriebsbewegung der Antriebsmittel. Insbesondere dann, wenn die Signalisierungsmittel ausgebildet sind, um voneinander unterschiedliche Positionierungssignale zur Signalisierung unterschiedlicher Positionierungszustände auszusenden ist es bevorzugt, wenn die Art bzw. der Informationsgehalt des jeweils ausgesendeten Positionierungssignals abhängig ist von einer Bewegungsrichtung der Antriebsmittel. So können die Signalisierungsmittel beispielsweise so gestaltet sein, dass diese ein Positionierungssignal zur Signalisierung eines Erreichens und/oder Überführens des Unterlegkeils in eine unter das Nutzfahrzeug unterlegte Position signalisieren, wenn die Antriebsmittel in eine erste Richtung bewegt werden und ein Positionierungssignal zur Signalisierung eines Erreichens und/oder Überführens des Unterlegkeils in eine nicht unter das Fahrzeugrad untergelegte Position, also ein das Entfernen signalisierendes Positionierungssignal aussenden, wenn die Antriebsmittel in eine entgegengesetzte Richtung bewegt werden, insbesondere über fakultativ vorgesehene, später noch zu erläuternde Rückstellmittel. Auch ist eine Ausführungsform der Signalisierungsmittel realisierbar, bei der diese nicht bereits dann das Positionierungssignal aussenden, sobald ausreichend elektrische Energie von den Energieumwandlungsmitteln erzeugt wurde, sondern erst dann, wenn eine weitere Übermittlungsbedingung erfüllt ist, beispielsweise das Erreichen einer bestimmten bzw. vorgegebenen Antriebs- bzw. Verstellposition der Antriebsmittel, welche beispielsweise bei Erreichen dieser Position einen entsprechenden Kontakt schließen, also insofern zusätzlich zu der die Energieumwandlungsmittel antreibenden Antriebsfunktion eine Schalterfunktion innehaben. Selbstverständlich kann die bestimmte Position auch auf andere Weise detektiert werden.

Wie bereits angedeutet, können die Signalisierungsmittel so ausgebildet sein, dass diese nicht nur ein Positionierungssignal zur Signalisierung eines Erreichens und/oder Überführens des Unterlegkeils in eine unter das Nutzfahrzeug untergelegte Position (des Unterlegkeils) übermitteln, sondern zusätzlich oder alternativ ein Positionierungssignal übermitteln, welches ein Verstellen des Unterlegkeils aus dieser Sicherungsposition heraus signalisiert, insbesondere wenn die Antriebsmittel über fakultative Rückstellmittel herausverstellt werden.

Besonders zweckmäßig ist eine Ausführungsform des Unterlegkeils, insbesondere bei der bevorzugten Realisierung einer ausschließlich unidirektionalen drahtlosen Übermittlung, insbesondere einer ausschließlich unidirektionalen Funkverbindung bzw. -strecke, wenn die Signalisierungsmittel zum mehrfachen Signalisieren eines Positionierungssignals ausgebildet sind, insbesondere derart, dass nach Ablauf einer definierten Zeitspanne nach Aussenden eines ersten Positionierungssignals ein weiteres zweites, beispielsweise identisches, Positionierungssignal aussendbar ist. Eine derartige Ausführungsform hat den Vorteil einer erhöhten Übertragungssicherheit, da die Wahrscheinlichkeit, dass Empfangsmittel zumindest ein Positionierungssignal empfangen signifikant erhöht ist. Denkbar ist es auch, eine den Empfangsmitteln zugeordnete Steuerelektronik, d.h. Logikmittel so auszubilden, dass diese ein nach Ablauf der vorgegebenen Zeitspanne empfangenes, insbesondere identisches, Positionierungssignal als Endsicherungssignal werten, also als Signal dafür, dass der Unterlegkeil aus der Sicherungsposition unter dem Nutzfahrzeugrad entfernt wird oder wurde. Ebenfalls ist eine Ausführungsform realisierbar, bei der Signalisierungsmittel, insbesondere in regelmäßigen Abständen mehr als zweimal ein Positionierungssignal, insbesondere ein identisches Positionierungssignal aussendend ausgebildet sind, vorzugsweise über eine gesamte Sicherungs-Zeitspanne, in der sich der Unterlegkeil in einer unter das Nutzfahrzeugrad untergelegten Position befindet, welche beispielsweise durch das Erreichen bzw. Einhalten einer definierten Verstellposition der Antriebsmittel detektierbar ist.

Alternativ ist es auch möglich, eine bidirektionale drahtlose Verbindung, insbesondere eine bidirektionale Funkverbindung bzw. -strecke zu realisieren. Bei einer derartigen Ausführungsform ist es bevorzugt, wenn die Signalisierungsmittel nach Ausbleiben bzw. Nicht-Empfangen eines Quittierungssignals innerhalb einer vorgegebenen Zeitspanne nach Aussenden des Positionierungssignals erneut ein Positionierungssignal aussenden. Bevorzugt wird bei einer bidirektionalen Übermittlung nur dann ein weiteres Mal ein Positionierungssignal ausgesendet, wenn das vorerwähnte Quittierungssignal nicht (innerhalb der vorgegebenen Zeitspanne nach Aussenden des ersten Positionierungssignals) empfangen wird.

Besonders bevorzugt ist eine Ausführungsform der Signalisierungsmittel, bei der diese zusätzlich zu einem (reinen) Positionierungssignal eine Unterlegkeil-Identifikationsinformation drahtlos aussendend ausgebildet sind, insbesondere in Form eines individualistischen Signals, um es Empfangsmitteln zugeordneten Logikmitteln zu ermöglichen, zu identifizieren, von welchem Unterlegkeil einer Gruppe von Unterlegkeilen das empfangene Positionierungssignal ausgesendet wurde. Hierdurch ist eine Zuordnung der Unterlegkeile bzw. Positionierungssignale zu bestimmten Verladerampen und/oder Verladetoren möglich.

Um die Bewegungsenergie der Antriebsmittel optimal zu nutzen hat es sich als vorteilhaft herausgestellt, wenn die Umwandlungsmittel ein durch die Antriebsbewegung der Antriebsmittel antreibbares Schwungelement, insbesondere ein Schwungrad umfassen, um auch dann noch elektrische Energie mit Hilfe der Energieumwandlungsmittel erzeugen zu können, wenn die eigentliche Bewegung der Antriebsmittel bereits abgeschlossen ist. Mit Hilfe des Schwungelementes ist dann bevorzugt ein Generator der Energieumwandlungsmittel, beispielsweise rotierbar, antriebbar.

Im Hinblick auf die konkrete Ausgestaltung der Energieumwandlungsmittel gibt es unterschiedliche Möglichkeiten. Grundsätzlich ist es bevorzugt, wenn dieser eine Relativbewegung eines magnetischen Feldes und eines elektrischen Leiters als grundsätzliches Wirkprinzip nutzt, insbesondere in der Form eines Drehgenerators und/oder eines Lineargenerators, wobei im erstgenannten Fall entweder eine unmittelbare Verschwenk- oder Rotationsbewegung der Antriebsmittel genutzt wird oder eine lineare Antriebsmittelbewegung in eine Rotationsbewegung umgewandelt wird. Bei der Realisierung eines Lineargenerators kann unmittelbar eine translatorische Verstellbewegung von Antriebsmitteln zum Antreiben des Lineargenerators benutzt werden. Bevorzugt sind die Antriebsmittel dabei Teil eines Lineargenerators, beispielsweise indem sie einen entsprechenden Permanentmagnet tragen.

Eine alternative Möglichkeit zur Umwandlung der Bewegungsenergie der Antriebsmittel in elektrische Energie besteht in der Ausnutzung des piezoelektrischen Effektes. Hierbei wird die Bewegungsenergie der Antriebsmittel zur Verformung mindestens eines Piezoelementes und damit zur Erzeugung elektrischer Energie genutzt. Ggf. können hier Kraftübersetzungsmittel vorgesehen werden, um notwendige Anpressdrücke aus der Bewegungsenergie der Antriebsmittel zu generieren.

Wie bereits angedeutet ist es besonders zweckmäßig, wenn die Antriebsmittel entgegen der Federkraft von Rückstellfedermitteln antreibbar bzw. verstellbar angeordnet sind. Im einfachsten Fall dienen die Rückstellfedermittel dazu, eine ursprüngliche Ausgangsposition der Antriebsmittel wieder einzunehmen. Sie können jedoch auch als Energiespeicher genutzt werden zur Gewinnung elektrischer Energie, indem die gespeicherte Energie zunächst wieder in eine Rückstellbewegung der Antriebsmittel und diese Bewegungsenergie zur Erzeugung elektrischer Energie mit Hilfe der Energieumwandlungsmittel genutzt wird, insbesondere um ein Positionierungssignal drahtlos zu übermitteln, welches das Herausverstellen oder Erreichen einer unter dem Nutzfahrzeugrad herausverstellten Position dient.

Grundsätzlich ist es bevorzugt, wenn die Signalisierungsmittel nicht nur das Überführen in eine und/oder das Erreichen einer unter ein Nutzfahrzeugrad untergelegten Sicherungsposition des Unterlegkeils signalisieren bzw. ein entsprechendes Positionierungssignal drahtlos übermitteln, sondern auch das Herausbewegen des Unterlegkeils aus einer solchen Sicherungsposition und/oder das Erreichen einer ursprünglichen Verstellposition der Antriebsmittel des Unterlegkeils.

Ganz besonders vorteilhaft hat es sich herausgestellt, wenn die Antriebsmittel ein zur Anlage an dem Nutzfahrzeugrad optimiertes, insbesondere gekrümmtes, Plattenelement umfassen, welches noch weiter bevorzugt an dem Grundkörper angelenkt ist. Besonders zweckmäßig ist es, wenn mit diesem Plattenelement gelenkig oder starr ein Stabteil verbunden ist, welches wiederum die Energieumwandlungsmittel, insbesondere entgegen der Federkraft einer sich beispielsweise als Spiralfeder um das stabförmige Element erstreckende Rückstellmittel antreibt.

Die Erfindung führt auch auf ein Standsicherungssystem für Nutzfahrzeuge, umfassend mindestens einen nach dem Konzept der Erfindung ausgesandten Unterlegkeil sowie zu diesem, insbesondere über mehrere Meter beabstandbaren und/oder beabstandeten Empfangsmittel zum Empfangen des von den Signalisierungsmittel des Unterlegkeils drahtlos übermittelten Positionierungssignals. Ganz besonders bevorzugt sind die Empfangsmittel Teil einer Verladeeinrichtungssteuerung, beispielsweise einer Verladerampe und/oder eines Verladetores und/oder von akustischen und/oder visuellen Hinweismitteln, insbesondere einer Informationsampel. Das nach dem Konzept der Erfindung ausgebildete Standsicherungssystem zeichnet sich durch eine drahtlose, vorzugsweise unidirektionale Signalisierungsverbindung zwischen dem Unterlegkeil und den Empfangsmitteln aus, wobei den Empfangsmitteln zugeordnete Logikmittel bevorzugt in Abhängigkeit des Empfangs des Positionierungssignals eine Verladeeinrichtung, beispielsweise eine Verladerampe und/oder ein Verladetor ansteuern, insbesondere freischalten oder sperren, beispielsweise indem ein Steuerstromkreis unterbrochen oder freigegeben wird. Zusätzlich oder alternativ können die Logikmittel akustische und/oder visuelle Hinweismittel zur Information über einen gesicherten oder ungesicherten Zustand ansteuern. Je nach Ausgestaltung der Logikmittel können diese bei entsprechender Ausgestaltung der Signalisierungsmittel zwischen unterschiedlichen Positionierungssignalen unterscheidend ausgebildet sein, beispielsweise zwischen einem eine Sicherungsposition signalisierenden Positionierungssignal und einem fakultativen, einer Nicht-Entsicherung signalisierenden Positionierungssignal.

Besonders zweckmäßig ist eine Ausgestaltung des Standsicherungssystems, bei der die Logikmittel zwischen unterschiedlichen Unterlegkeilen des Systems unterscheiden können, d.h. ein empfangendes Positionierungssignal anhand einer mitübersandten Individualisierungskennung (Unterlegkeil-Identifikationsinformation) einer bestimmten von mehreren Verladeeinrichtungen und/oder einer bestimmten von mehreren Hinweismitteln zuordnen.

Die Erfindung führt auch auf die Verwendung eines nach dem Konzept der Erfindung ausgebildeten Unterlegkeils als Standsicherung für Nutzfahrzeuge, insbesondere LKW, vorzugsweise während des Be- oder Entladens, bevorzugt an einer Verladerampe und/oder an einem Verladetor. Darüber hinaus führt die Erfindung auf ein Betriebsverfahren zum Betreiben bzw. Anwenden eines Unterlegkeils, welcher bevorzugt nach dem Konzept der Erfindung ausgebildet ist, wobei der Unterlegkeil unter ein Nutzfahrzeugrad gelegt wird und dadurch Antriebsmittel des Unterlegkeils betätigt bzw. angetrieben werden, wobei die hierdurch eingebrachte Bewegungsenergie der Antriebsmittel in elektrische Energie umgewandelt wird, mit welcher dann wiederum Signalisierungsmittel versorgt werden zum drahtlosen Aussenden, insbesondere Funken eines Positionierungssignals, welches bevorzugt das Erreichen und/oder Überführen des Unterlegkeils in die untergelegte Position signalisiert.

Weiterbildungen des erfindungsgemäßen Verfahrens sind im Rahmen der Erläuterung vorteilhafter Ausgestaltungen der Vorrichtung im Detail erläutert.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
Fig. 1
   bis
Fig. 3 klapprichtige Darstellungen eines nach dem Konzept der Erfindung ausgebildeten Unterlegkeils, und
Fig. 4 eine perspektivische Ansicht des Unterlegkeils von schräg hinten.

In den Figuren sind gleiche Elemente und Elemente mit der gleichen Funktion mit den gleichen Bezugszeichen gekennzeichnet.

In den Figuren zu erkennen ist ein Unterlegkeil 1 zur Verwendung als Standsicherung beim Be- und Entladen von Nutzfahrzeugen, insbesondere LKWs. Der Unterlegkeil 1 dient zum Unterlegen unter ein Nutzfahrzeugrad.

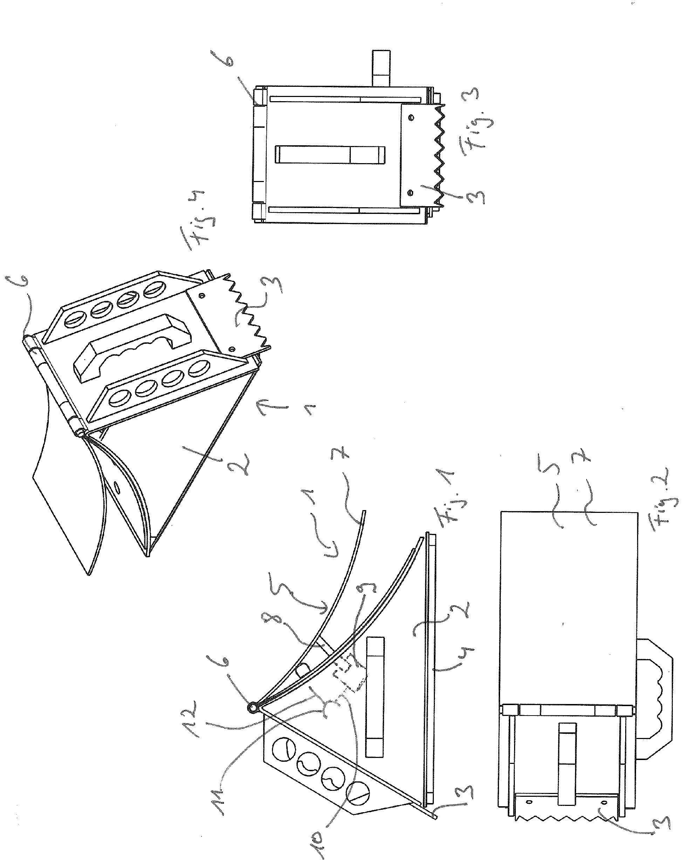

Der gezeigte Unterlegkeil 1 umfasst einen Grundkörper 2, beispielsweise aus Stahlblech, wobei, wie aus Fig. 3 ersichtlich ist, rückseitig eine Haltekralle 3 vorgesehen ist, die ein Weggleiten bzw. Wegrutschen des Unterlegkeils 1 verhindert. Bei Bedarf kann der Grundkörper 2 an einer Unterseite 4 zusätzlich oder alternativ zu den Haltekrallen 3 mit einem rutschhemmenden Material, beispielsweise einer Gummierung, insbesondere in Form einer Gummimatte versehen sein.

Der Unterlegkeil 1 umfasst neben dem Grundkörper 2 relativ zu dem Grundkörper 2 verstellbare Verstellmittel 5, die bei der gezeigten Ausführungsform durch unmittelbare Wechselwirkung mit dem Nutzfahrzeugrad bei einem Unterlegvorgang betätigbar sind.

Die Verstellmittel 5 umfassen eine, mittels eines Schwenkgelenks an dem Grundkörper 2 angelenktes, gekrümmtes Plattenelement 7, welches näherungsweise einer Nutzfahrzeugradkontur, angepasst ist. Mechanisch gekoppelt mit dem Plattenelement 7 ist ein Stabelement 8, welches durch eine zugeordnete, nicht gezeigte Öffnung in das Innere des Grundkörpers 2 hineinragt. Durch Verstellen des Unterlegkeils 1 mittels des Plattenelementes 7 gegen das Nutzfahrzeugrad werden die Antriebsmittel 5 verschwenkt und zwar relativ zu dem Grundkörper 2, hier auf den Grundkörper 2 zu, wobei hierdurch das Stabelement 8 der Antriebsmittel weiter in den Grundkörper 2 verschoben wird.

Stark schematisiert angedeutet ist in Fig. 1 der prinzipielle innere Aufbau des Grundkörpers 2 gezeigt. Zu erkennen ist, dass den Antriebsmitteln 5 Energieumwandlungsmittel 9, beispielsweise in Form eines Lineargenerators zugeordnet sind, welche die Bewegungsenergie der Antriebsmittel 5 durch Verstellen der Antriebsmittel 5 gegen das Nutzfahrzeugrad umwandeln in elektrische Energie. Die Antriebsmittel 5 treiben hierzu die Energieumwandlungsmittel 9 mit ihrer Bewegungsenergie an. Die erzeugte elektrische Energie wird über eine im Grundkörper 2 vorgesehene interne Versorgungsleitung 10 zu Signalisierungsmitteln 11 des Unterlegkeils geführt, die mittels der elektrischen Energie ein Positionierungssignal drahtlos, in dem konkreten Ausführungsbeispiel per Funk (alternativ optisch oder akustisch) an nicht gezeigte, dem Unterlegkeil zugeordnete Empfangsmittel übersendet. Diese finden sich in der Praxis üblicherweise in einem Abstand zwischen zwei und fünfzehn Metern zu dem untergelegten Unterlegkeil. Wie aus den Figuren zu erkennen ist, ist der Unterlegkeil frei von einer externen Stromversorgung sowie frei von einem externen Positioniersignalleitungskabel und ebenso frei von entsprechenden Kontaktstellen, insbesondere Buchsen zum lösbaren Festlegen solcher Kabel. Unterlegkeil 1 ist energetisch autark.

Bei einer alternativen Ausführungsform können bei Bedarf, insbesondere einen Kondensator umfassende Energiepuffermittel zur Zwischenspeicherung der mittels der Energieumwandlungsmittel 9 erzeugten elektrischen Energie vorgesehen sein, um diese Energie bei Bedarf, insbesondere zeitversetzt an die Signalisierungsmittel 11 abgeben zu können.

Die Signalisierungsmittel 11 umfassen eine Sendeantenne 12 die so, beispielsweise relativ zu einer Öffnung im Grundkörper 2 angeordnet ist, so dass das Positionierungssignal mit ausreichender Feldstärke den Unterlegkeil verlässt.

Im Hinblick auf die relativ realisierbare Ausführungsform wird auf den allgemeinen Beschreibungsteil verwiesen.

### Bezugszeichenliste

- 1: Unterlegkeil
- 2: Grundkörper
- 3: Haltekralle
- 4: Unterseite
- 5: Antriebsmittel
- 6: Schwenkgelenk
- 7: Plattenelement
- 8: Stabelement
- 9: Energieumwandlungsmittel
- 10: interne Versorgungsleitung
- 11: Signalisierungsmittel
- 12: Sendeantenne

## Patentansprüche

1. Unterlegkeil zum Unterlegen unter ein Nutzfahrzeugrad als Standsicherung, mit einem Grundkörper (2) sowie mit zum Übermitteln eines Positionierungssignals an von dem Unterlegkeil (1) beabstandete und von diesem separate Empfangsmittel ausgebildeten Signalisierungsmitteln (11), die zur drahtlosen, insbesondere funkbasierten, Übermittlung des Positionierungssignals ausgebildet sind, wobei der Unterlegkeil (1) relativ zu dem Grundkörper (2) durch Unterlegen unter das Nutzfahrzeugrad verstellbare Antriebsmittel (5) aufweist,
**dadurch gekennzeichnet,**
**dass** mittels der Antriebsmittel (5) den Signalisierungsmitteln (11) zugeordnete, vorzugsweise im und/oder am Grundkörper angeordnete, Energieumwandlungsmittel (9) antreibbar sind, welche zum Umwandeln einer Bewegungsenergie der Antriebsmittel (5) in elektrische Energie zur Energieversorgung der Signalisierungsmittel (11) ausgebildet und angeordnet sind.

2. Unterlegkeil nach Anspruch 1,
**dadurch gekennzeichnet,**
**dass** der Unterlegkeil (1) frei ist von einem externen Stromversorgungs- und/oder einem Positioniersignalleitungskabel und/oder frei ist von einer Kontaktstelle zum lösbaren Festlegen eines Stromversorgungs- und/oder Positioniersignalleitungskabels.

3. Unterlegkeil nach einem der Ansprüche 1 oder 2,
**dadurch gekennzeichnet,**
**dass** den Energieumwandlungsmitteln (9), vorzugsweise nicht von extern ladbare, Energiepuffermittel zum Puffern von von den Energieumwandlungsmitteln (9) erzeugter elektrischer Energie und zur Abgabe elektrischer Energie an die Signalisierungsmittel (11) zugeordnet sind.

4. Unterlegkeil nach einem der vorhergehenden Ansprüche,
**dadurch gekennzeichnet,**
**dass** die Signalisierungsmittel (11) das Positionierungssignal zur Signalisierung eines Erreichens und/oder Überführens des Unterlegkeils (1) in eine unter das Nutzfahrzeugrad untergelegte Position in Abhängigkeit einer, insbesondere richtungsabhängigen, Antriebsbewegung der Antriebsmittel (5) und/oder des Erreichens einer vorgegebenen ersten Antriebsposition der Antriebsmittel (5) übermittelnd ausgebildet sind.

5. Unterlegkeil nach einem der vorhergehenden Ansprüche,
**dadurch gekennzeichnet,**
**dass** die Signalisierungsmittel (11) das Positionierungssignal zur Signalisierung eines Erreichens und/oder Überführens des Unterlegkeils (1) in eine nicht unter das Nutzfahrzeugrad untergelegte Position in Abhängigkeit einer, insbesondere richtungsabhängigen, Antriebsbewegung der Antriebsmittel (5) und/oder des Erreichens einer vorgegebenen zweiten Antriebsposition, insbesondere einer Ausgangsposition, der Antriebsmittel (5) übermittelnd ausgebildet sind.

6. Unterlegkeil nach einem der vorhergehenden Ansprüche,
**dadurch gekennzeichnet,**
**dass** die Signalisierungsmittel (11) zum mehrfachen Signalisieren eines Positionierungssignals ausgebildet sind, insbesondere zum Signalisieren eines zweiten Positionierungssignals, bevorzugt nach Ablauf einer definierten Zeitspanne nach Aussenden eines ersten Positionierungssignals und/oder nach Ausbleiben eines fakultativen Quittierungssignals.

7. Unterlegkeil nach einem der vorhergehenden Ansprüche,
**dadurch gekennzeichnet,**
**dass** die Signalisierungsmittel (11) zusätzlich zu einem Positionierungssignal eine Unterlegkeilidentifikationsinformation drahtlos signalisierend ausgebildet sind.

8. Unterlegkeil nach einem der vorhergehenden Ansprüche,
**dadurch gekennzeichnet,**
**dass** die Energieumwandlungsmittel (11) ein durch eine Antriebsbewegung der Antriebsmittel (5) antreibbares Schwungelement, insbesondere Schwungrad, zum Erzeugen von elektrischer Energie nach Beendigung der Antriebsbewegung der Antriebsmittel (5) umfassen.

9. Unterlegkeil nach einem der vorhergehenden Ansprüche,
**dadurch gekennzeichnet,**
**dass** die Energieumwandlungsmittel (11) einen Drehgenerator und/oder einen Lineargenerator und/oder piezoelektrische Energieumwandlungsmittel (9) umfassen.

10. Unterlegkeil nach einem der vorhergehenden Ansprüche,
**dadurch gekennzeichnet,**
**dass** die Antriebsmittel (5) entgegen der Federkraft von Rückstellfedermitteln verstellbar angeordnet sind.

11. Unterlegkeil nach einem der vorhergehenden Ansprüche,
**dadurch gekennzeichnet,**
**dass** die Antriebsmittel (5) ein zur Anlage an dem Nutzfahrzeugrad ausgebildeten, insbesondere gekrümmten, vorzugsweise an dem Grundkörper (2) angelenkten Plattenelement umfassen.

12. Unterlegkeil nach einem der vorhergehenden Ansprüche,
**dadurch gekennzeichnet,**
**dass** die Signalisierungsmittel (11) zum Herstellen einer ausschließlich unidirektionalen Funkverbindung oder alternativ einer bidirektionalen Funkverbindung ausgebildet sind.

13. Standsicherungssystem für Nutzfahrzeuge, umfassend einen Unterlegkeil nach einem der vorhergehenden Ansprüche sowie von dem Unterlegkeil (1) separate und zu diesem beabstandete Empfangsmittel zum Empfangen des von dem Unterlegkeil (1) drahtlos, vorzugsweise via Funk, übermittelten Positionierungssignals.

14. Standsicherungssystem nach Anspruch 13,
**dadurch gekennzeichnet,**
**dass** den Empfangsmittel Logikmittel zugeordnet sind, die in Abhängigkeit des Empfangs der Positionierungsinformation akustische und/oder visuelle Hinweismittel, insbesondere eine Ampel, ansteuernd und/oder eine Verladeeinrichtung, insbesondere eine Verladerampe und/oder ein Verladetor, freischaltend oder sperrend ausgebildet sind.

15. Standsicherungssystem nach einem der Ansprüche 13 oder 14,
**dadurch gekennzeichnet,**
**dass** das Standsicherungssystem mehrere Unterlegkeile (1) umfasst und dass eine Zuordnung der jeweiligen Unterlegkeile (1) zu einer bestimmten von mehreren Verladeeinrichtungen und/oder zu bestimmten von mehreren Hinweismitteln über eine von den Logikmitteln auswertbare, drahtlos von den Unterlegkeilen (1) übermittelbare Unterlegkeilidentifikationsinformationen realisiert ist.

16. Verwendung eines Unterlegkeils nach einem der Ansprüche 1 bis 10 als Standsicherung von Nutzfahrzeugen, insbesondere während des Be- oder Entladens, vorzugsweise an einer Verladerampe.

17. Verfahren zum Betreiben eines Unterlegkeils nach einem der Ansprüche 1 bis 12, wobei der Unterlegkeil unter ein Nutzfahrzeugrad gelegt wird,
**dadurch gekennzeichnet,**
**dass** durch Wechselwirkung des Unterlegkeils (1) mit dem Nutzfahrzeugrad Antriebsmittel (5) des Unterlegkeils (1) relativ zu einem Grundkörper (2) des Unterlegkeils (1) verstellt werden, und dass die Bewegungsenergie der Antriebsmittel (5) mittels Energieumwandlungsmitteln des Unterlegkeils (1) umgewandelt wird in elektrische Energie zur Energieversorgung von Signalisierungsmitteln (11) des Unterlegkeils (1), die drahtlos ein Positionierungssignal aussenden, insbesondere funken.

## Claims

1. A wheel chock for being placed below a commercial vehicle wheel as a way of securing the vehicle, having a base body (2) as well as having signalling means (11) that are configured for transmitting a positioning signal to receiving means being spaced apart from the wheel chock (1) and being separate from the same and that are configured for wireless, in particular radio-based, transmission of the positioning signal, the wheel chock (1) including drive means (5) that can be adjusted in relation to the base body (2) by being placed below the commercial vehicle wheel,
**characterised in that**
energy conversion means (9) that are assigned to the signalling means (11) and are preferably arranged in and/or at the base body and that are configured and arranged for converting a kinetic energy of the drive means (5) into electrical energy for the electrical power supply of the signalling means (11) can be driven by means of the drive means (5).

2. The wheel chock according to claim 1,
**characterised in that**
the wheel chock (1) is free from an external power supply cable and/or a positioning signal transmission cable and/or is free from a contact point for removably fixing a power supply cable and/or positioning signal transmission cable.

3. The wheel chock according to any one of claims 1 or 2,
**characterised in that**
energy buffer means, which preferably cannot be charged from the outside, for buffering electrical energy generated by the energy conversion means (9) and for releasing electrical energy to the signalling means (11), are assigned to the energy conversion means (9).

4. The wheel chock according to any one of the preceding claims,
**characterised in that**
the signalling means (11) are configured so as to transmit the positioning signal for signalling that the wheel chock (1) has reached and/or is being transferred into a position where it is placed below the commercial vehicle wheel, as a function of a drive movement of the drive means (5), which is in particular directional, and/or that a specified first drive position of the drive means (5) has been reached.

5. The wheel chock according to any one of the preceding claims,
**characterised in that**
the signalling means (11) are configured so as to transmit the positioning signal for signalling that the wheel chock (1) has reached and/or is being transferred into a position where it is not placed below the commercial vehicle wheel, as a function of a drive movement of the drive means (5), which is in particular directional, and/or that a specified second drive position of the drive means (5), in particular a starting position, has been reached.

6. The wheel chock according to any one of the preceding claims,
**characterised in that**
the signalling means (11) are configured for multiple signalling of a positioning signal, in particular for signalling a second positioning signal, preferably after a defined period of time after a first positioning signal has been emitted and/or when a facultative acknowledgement signal has not been received.

7. The wheel chock according to any one of the preceding claims,
**characterised in that**
the signalling means (11) are configured so as to signalise, in addition to a positioning signal, wheel chock identification information wirelessly.

8. The wheel chock according to any one of the preceding claims,
**characterised in that**
the energy conversion means (9) comprise a fly element that can be driven by a drive movement of the drive means (5), in particular a fly wheel, for generating electrical energy upon completion of the drive movement of the drive means (5).

9. The wheel chock according to any one of the preceding claims,
**characterised in that**
the energy conversion means (9) comprise a rotary generator and/or a linear generator and/or piezoelectric energy conversion means (9).

10. The wheel chock according to any one of the preceding claims,
**characterised in that**
the drive means (5) are arranged so as to be adjustable against the spring force of return spring means.

11. The wheel chock according to any one of the preceding claims,
**characterised in that**
the drive means (5) comprise a plate element that is configured for resting against the commercial vehicle wheel and that is in particular bent, and that is preferably articulated to the base body (2).

12. The wheel chock according to any one of the preceding claims, **characterised in that**
the signalling means (11) are configured for establishing a radio communication that is exclusively unidirectional or alternatively a bidirectional radio communication.

13. A securing system for commercial vehicles, comprising a wheel chock according to any one of the preceding claims as well as receiving means that are separate from the wheel chock (1) and spaced apart from the same, for receiving the positioning signal transmitted by the wheel chock (1) wirelessly, preferably by radio.

14. The securing system according to claim 13,
**characterised in that**
logic means are assigned to the receiving means, said logic means being configured, as a function of receiving the positioning information, so as to activate acoustic and/or visual indicator means, in particular a traffic light, and/or so as to unlock or lock a loading unit, in particular a loading platform and/or a loading gate.

15. The securing system according to any one of claims 13 or 14,
**characterised in that**
the securing system comprises several wheel chocks (1) and **in that** an allocation of the respective wheel chocks (1) to a certain one of several loading units and/or to certain ones of several indicator means is realised via wheel chock identification information that can be evaluated by the logic means and can be transmitted wirelessly by the wheel chocks (1).

16. A use of a wheel chock according to any one of the claims 1 to 10 as a securing system for commercial vehicles, in particular during loading or unloading, preferably at a loading platform.

17. A method for operating a wheel chock according to any one of the claims 1 to 12, the wheel chock being placed below a commercial vehicle wheel,
**characterised in that**
by the interaction of the wheel chock (1) with the commercial vehicle wheel, drive means (5) of the wheel chock (1) are adjusted in relation to a base body (2) of the wheel chock (1), and **in that** the kinetic energy of the drive means (5), by means of energy conversion means of the wheel chock (1), is converted into electrical energy for the power supply of signalling means (11) of the wheel chock (1), said signalling means emitting a positioning signal wirelessly, in particular by radio.

## Revendications

1. Cale pour être mise en dessous d'une roue d'un véhicule utilitaire comme contrôle de stabilité, ayant un corps de base (2) et ayant des moyens de signalisation (11) qui sont conçus pour transmettre un signal de positionnement à des moyens récepteurs étant espacés de la cale (1) et étant séparés de la cale et qui sont conçus pour la transmission sans fil, en particulier par radio, du signal de positionnement, la cale (1) présentant des moyens d'entraînement (5) qui peuvent être ajustés par rapport au corps de base (2) en étant mis en dessous de la roue du véhicule utilitaire,
**caractérisée en ce que**
des moyens de conversion d'énergie (9) qui sont attribués aux moyens de signalisation (11) et sont disposés de préférence dans et/ou au corps de base et qui sont conçus et disposés pour convertir de l'énergie cinétique des moyens d'entraînement (5) en énergie électrique pour la fourniture d'énergie électrique des moyens de signalisation (11) peuvent être entraînés à l'aide des moyens d'entraînement (5).

2. Cale selon la revendication 1,
**caractérisée en ce que**
la cale est dépourvue d'un câble d'alimentation en courant externe et/ou d'un câble de ligne de signal de positionnement et/ou est dépourvue d'une pièce de contact pour fixer un câble d'alimentation en courant et/ou un câble de ligne de signal de positionnement de manière amovible.

3. Cale selon l'une quelconque des revendications 1 ou 2,
**caractérisée en ce que**
des moyens d'amortissement d'énergie, qui ne peuvent pas chargés de l'extérieur de préférence, pour amortir de l'énergie électrique produite par les moyens de conversion d'énergie (9) et pour émettre de l'énergie électrique aux moyens de signalisation (11), sont attribués aux moyens de conversion d'énergie (9).

4. Cale selon l'une quelconque des revendications précédentes,
**caractérisée en ce que**
les moyens de signalisation (11) sont conçus de manière à transmettre le signal de positionnement pour signaliser que la cale (1) est arrivée et/ou est transférée à une position mise en dessous de la roue du véhicule utilitaire, en fonction d'un mouvement d'entraînement des moyens d'entraînement (5), en particulier dépendant de la direction, et/ou qu'une première position d'entraînement prédéterminée des moyens d'entraînement (5) a été atteinte.

5. Cale selon l'une quelconque des revendications précédentes,
**caractérisée en ce que**
les moyens de signalisation (11) sont conçus de manière à transmettre le signal de positionnement pour signaliser que la cale (1) est arrivée et/ou est transférée à une position non mise en dessous de la roue du véhicule utilitaire, en fonction d'un mouvement d'entraînement des moyens d'entraînement (5), en particulier dépendant de la direction, et/ou qu'une deuxième position d'entraînement prédéterminée des moyens d'entraînement (5), en particulier une position initiale, a été atteinte.

6. Cale selon l'une quelconque des revendications précédentes,
**caractérisée en ce que**
les moyens de signalisation (11) sont conçus pour signaliser un signal de positionnement plusieurs fois, en particulier pour signaliser un deuxième signal de positionnement, de préférence à l'issue d'un laps de temps défini après avoir émis un premier signal de positionnement et/ou en l'absence d'un signal d'accusé de réception facultatif.

7. Cale selon l'une quelconque des revendications précédentes,
**caractérisée en ce que**
les moyens de signalisation (11) sont conçus de manière à signaliser sans fil, en plus d'un signal de positionnement, une information d'identification de cale.

8. Cale selon l'une quelconque des revendications précédentes,
**caractérisée en ce que**
les moyens de conversion d'énergie (9) comprennent un élément de lancée qui peut être entraîné par un mouvement d'entraînement des moyens d'entraînement (5), en particulier un volant d'inertie, pour produire de l'énergie électrique après l'achèvement du mouvement d'entraînement des moyens d'entraînement (5).

9. Cale selon l'une quelconque des revendications précédentes,
**caractérisée en ce que**
les moyens de conversion d'énergie (9) comprennent un générateur rotatif et/ou un générateur linéaire et/ou des moyens d'entraînement (9) piézoélectriques.

10. Cale selon l'une quelconque des revendications précédentes,
**caractérisée en ce que**
les moyens d'entraînement (5) sont disposés de manière à pouvoir être ajustés contre la force de ressort de moyens de ressort de rappel.

11. Cale selon l'une quelconque des revendications précédentes,
**caractérisée en ce que**
les moyens d'entraînement (5) comprennent un élément de plaque conçu pour venir en appui contre la roue du véhicule utilitaire et en particulier courbé et de préférence articulé sur le corps de base (2).

12. Cale selon l'une quelconque des revendications précédentes,
**caractérisée en ce que**
les moyens de signalisation (11) sont conçus pour faire une liaison radioélectrique exclusivement unidirectionnelle ou alors une liaison radioélectrique bidirectionnelle.

13. Système de contrôle de stabilité pour des véhicules utilitaires, comprenant une cale selon l'une quelconque des revendications précédentes ainsi que des moyens récepteurs étant séparés de la cale (1) et espacés de la même, pour recevoir le signal de positionnement transmis par la cale (1) sans fil, de préférence par radio.

14. Système de contrôle de stabilité selon la revendication 13,
**caractérisée en ce que**
des moyens logiques sont attribués aux moyens récepteurs, les moyens logiques étant conçus, en fonction de la réception de l'information de positionnement, de manière à commander des moyens indicateurs acoustiques ou visuels, en particulier un feu de signalisation, et/ou à déverrouiller ou bloquer une unité de chargement, en particulier une rampe de chargement et/ou une porte de chargement.

15. Système de contrôle de stabilité selon l'une quelconque des revendications 13 ou 14,
**caractérisée en ce que**
le système de contrôle de stabilité comprend plusieurs cales (1) et **en ce qu'**une attribution des cales (1) respectives à une certaine unité de plusieurs unités de chargement et/ou à certains moyens indicateurs de plusieurs moyens indicateurs est réalisée via une information d'identification de cale qui peut être évaluée par les moyens logiques et qui peut être transmise par les cales (1) sans fil.

16. Utilisation d'une cale selon l'une quelconque des revendications 1 à 10 comme contrôle de stabilité pour des véhicules utilitaires, en particulier pendant le chargement ou décharge, de préférence auprès d'une rampe de chargement.

17. Procédé d'opération d'une cale selon l'une quelconque des revendications 1 à 12, la cale étant mise en dessous d'une roue d'un véhicule utilitaire,
**caractérisée en ce que**
par l'interaction de la cale (1) avec la roue du véhicule utilitaire, des moyens d'entraînement (5) de la cale (1) sont ajustés par rapport à un corps de base (2) de la cale (1), et **en ce que** l'énergie cinétique des moyens d'entraînement (5), à l'aide des moyens de conversion d'énergie de la cale (1), est convertie en énergie électrique, pour la fourniture d'énergie de moyens de signalisation (11) de la cale (1), les moyens de signalisation émettant un signal de positionnement sans fil, en particulier par radio.
